# EUROPÄISCHE PATENTSCHRIFT

(11) **EP 2 079 604 B1**
(45) Veröffentlichungstag und Bekanntmachung des Hinweises auf die Patenterteilung: **31.10.2012**
(21) Anmeldenummer: 07801314.1
(22) Anmeldetag: 05.09.2007
(51) Int. Cl.: B60L 13/04

(54) **MAGNETPOL FÜR MAGNETSCHWEBEFAHRZEUGE**
MAGNET POLE FOR MAGNETICALLY LEVITATED VEHICLES
POLE MAGNETIQUE POUR VEHICULES A SUSTENTATION MAGNETIQUE

(30) Priorität: 12.10.2006 DE 102006049716
(43) Veröffentlichungstag der Anmeldung: 22.07.2009
(73) Patentinhaber: ThyssenKrupp Transrapid GmbH, 34127 Kassel (DE)
(72) Erfinder: BUGIEL, Peter, 34277 Fuldabrück (DE); PFANNKUCH, Harald, 34590 Wabern (DE); HAHN, Wolfgang, 34125 Kassel (DE); ZHENG, Qinghua, 82024 Taufkirchen (DE)
(74) Vertreter: Lorenz, Bernd Ingo Thaddeus
(86) Internationale Anmeldenummer: PCT/DE2007/001577
(87) Internationale Veröffentlichungsnummer: WO 2008/043328

(56) Entgegenhaltungen:
- WO-A-2005/087533
- WO-A-2005/087534
- JP-A- 6 290 933

## Beschreibung

Die Erfindung betrifft einen Magnetpol der im Oberbegriff des Anspruchs 1 angegebenen Gattung.

Magnetpole dieser Art werden bei Magnetschwebefahrzeugen in vielfältiger Form eingesetzt, z. B. als Teile von Trag-, Führ- oder Bremsmagneten. Sie enthalten zur Reduzierung von Kühl- und Isolationsproblemen wenigstens zwei in axialer Richtung des Kerns voneinander beabstandete Scheiben, die durch geeignete Isolationsschichten gegeneinander und gegen den Kern isoliert sind (DE 10 2004 011 940 A1). Aus elektrischen Gründen ist es zweckmäßig, die beiden Scheiben in einem dem Kern nahen Bereich elektrisch miteinander zu verbinden, da hierdurch die Notwendigkeit entfällt, nach innen durchgeführte, zwischen dem Kern und der ersten Lage endende, elektrische Anschlüsse anzubringen. Es sind daher auch Magnetpole der eingangs bezeichneten Gattung bekannt (DE 20 2004 011 942 A1), die eine kostengünstige und ohne aufwendige Isolierungsmaßnahmen herstellbare Verbindung der beiden Scheiben im Bereich des Kerns ermöglichen.

Bei der praktischen Anwendung derartiger Magnetpole wurde festgestellt, dass die Isolierung der Scheiben gegen den Kern noch nicht zufriedenstellend ist. Bei Anwendung von dünnen Isolationsschichten im Bereich des Kerns, was zur Wärmeabfuhr über den als Kühlkörper wirkenden Kern günstig wäre, kann es zu elektrischen Durchschlägen kommen, die die Isolierung zerstören. Werden dagegen dicke Isolationsschichten verwendet, die elektrische Durchschläge sicher vermeiden, wird die Kühlwirkung reduziert.

Ausgehend davon liegt der Erfindung das technische Problem zugrunde, den Magnetpol der eingangs bezeichneten Gattung so auszubilden, dass auch bei Anwendung einer vergleichsweise dünnen, den Kern umgebenden Isolationsschicht keine schädlichen, zu elektrischen Durchschlägen führenden Potentialerhöhungen auftreten.

Zur Lösung dieses Problems dienen die kennzeichnenden Merkmale des Anspruchs 1.

Die Erfindung geht von der Annahme aus, dass zumindest ein Teil der schädlichen Potentialerhöhungen durch die seitlichen Ränder der ersten, durch das Verbindungsteil gebildeten Lage verursacht wird. Durch die erfmdungsgemäßen, abgebogenen Ränder des Verbindungsteils wird dagegen erreicht, dass in den Randbereichen keine schädlichen Spitzenentladungen mehr auftreten und die Isolationsschicht daher an ihren axialen Rändern nicht stärker als in mittleren Teilen des Kerns belastet wird. Daher können durchgehend dünne Isolationsfolien verwendet werden, was sich günstig auf die Wärmeabfuhr auswirkt.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläuert. Es zeigen:
Fig. 1 die Draufsicht auf ein erstes Ausführungsbeispiel eines erfindungsgemäßen Verbindungsteils, das zur Verbindung von zwei für die Wicklung eines Magnetpols bestimmten Scheiben geeignet ist;
Fig. 2 eine Draufsicht auf einen Ausschnitt des Verbindungsteils nach Fig. 1 mit einem an diesem befestigten Leitungsbandabschnitt für eine erste Scheibe einer Wicklung;
Fig. 3 eine der Fig. 1 entsprechende Draufsicht auf das Verbindungsteil, jedoch mit einer auf dieses aufgelegten Isolationsfolie;
Fig. 4 eine der Fig. 2 entsprechende Draufsicht, jedoch mit einer zusätzlich eingelegten Isolationsfolie entsprechend Fig. 3;
Fig. 5 eine schematische und perspektivische Teilansicht des Verbindungsteils nach Fig. 1 bis 4 im Bereich einer Stoßfuge;
Fig. 6 einen schematischen Schnitt durch einen Magnetpol mit einer entsprechend Fig. 1 bis 5 hergestellten Wicklung; und
Fig. 7 eine der Fig. 1 entsprechende Draufsicht auf ein zweites Ausführungsbeispiel des erfindungsgemäßen Verbindungsteils.

Magnetpole, die einen Kern und aus zwei Scheiben bestehende Wicklungen aufweisen, sind allgemein bekannt. Die beiden Scheiben liegen in axialer Richtung einer Achse des Kerns übereinander und weisen vorzugsweise dieselbe Anzahl von Lagen auf. Diese sind einerseits durch Isolationsfolien gegeneinander, andererseits durch eine weitere Isolationsschicht gegenüber dem Kern elektrisch isoliert. Außerdem werden die Lagen der einen Scheibe vorzugsweise mit entgegengesetztem Wicklungssinn im Vergleich zur anderen Scheibe um den Kern gewickelt. An ihren ganz innen liegenden Lagen werden die Scheiben durch ein Verbindungsteil elektrisch miteinander verbunden.

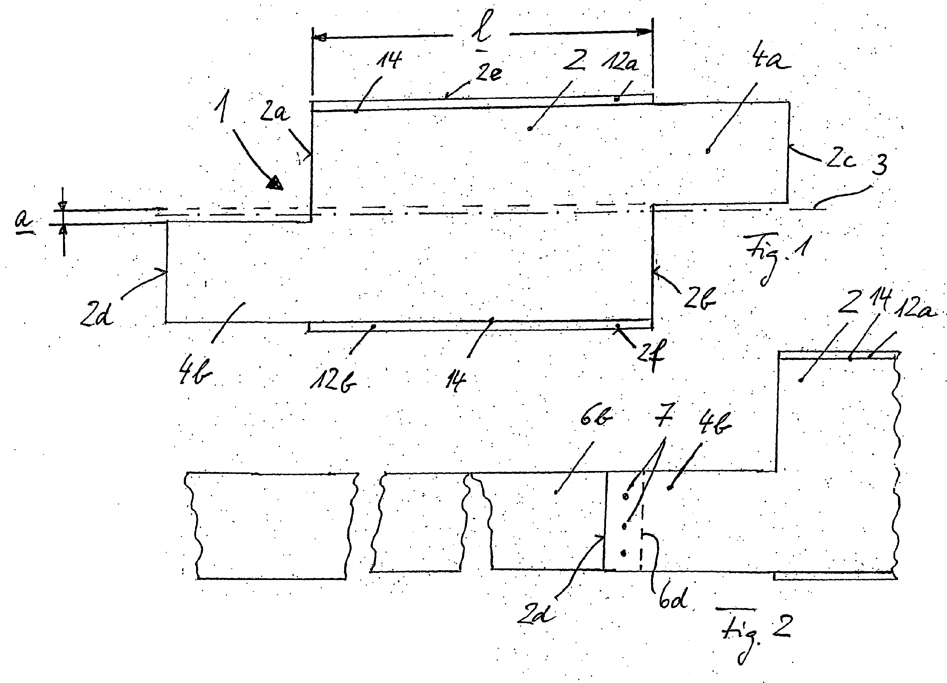

Nach Fig. 1 enthält ein solches, zur Verbindung von zwei Scheiben einer Wicklung bestimmtes Verbindungsteil 1 einen Mittelabschnitt 2 mit einer Mittel- bzw. Längsachse 3 und einer im wesentlichen der Höhe eines nicht dargestellten Kerns entsprechenden, quer zur Längsachse 3 gemessenen Breite. Der Mittelabschnitt 2 endet jeweils an quer zur Längsachse 3 erstreckten Endkanten 2a und 2b. Außerdem weist der Mittelabschnitt 2 gemäß Fig. 1 am rechten Ende und in seiner in Fig. 1 oberen Hälfte ein erstes Anschlussende 4a und am linken Ende und in seiner in Fig. 1 unteren Hälfte ein zweites Anschlussende 4b auf. Beide Anschlussenden 4a, 4b sind streifenförmig ausgebildet, entgegengesetzt zueinander ausgerichtet, über die betreffende Endkante 2a, 2b hinaus und parallel zur Längsachse 3 erstreckt und etwas weniger breit, als der Hälfte der Breite des Mittelabschnitts 2 entspricht.

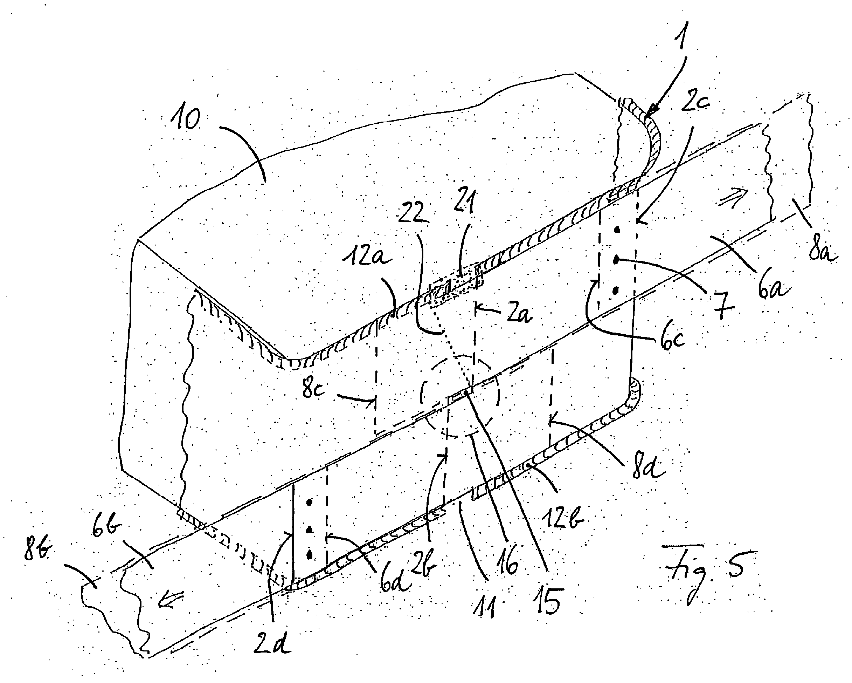

Die Anschussenden 4a, 4b enden entsprechend Fig. 1 an quer zur Längsachse 3 erstreckten Endkanten 2c und 2d und dienen in bekannter Weise zum Anschluss je eines Leitungsbandabschnitts. Dies ist in Fig. 2 anhand eines mit dem Anschlussende 4b verbundenen Leitungsbandabschnitt 6b gezeigt. Es ist klar, dass das andere Anschlussende 4a mit einem entsprechenden Leitungsbandabschnitt 6a verbunden ist (z. B. Fig. 5).

Das Verbindungsteil 1 und die Leitungsbandabschnitte 6a, 6b bestehen aus einem gut leitenden Material, z. B. Aluminium, und sind vorzugsweise durch Schweißen miteinander verbunden. Das ist in Fig. 2 durch Schweißpunkte 7 angedeutet, die in kurzen Überlappungsbereichen zwischen den Anschlussenden 4a, 4b und den Leitungsbandabschnitten 6a, 6b ausgebildet sind. Gestrichelte Linien 6c und 6d (vgl. auch Fig. 5) deuten dabei die am Verbindungsteil 1 endenden Endkanten der Leitungsbandabschnitte 6a, 6b an. Da Fig. 1 und 2 eine Draufsicht auf eine vom Kern abgewandte Oberfläche des Verbindungsteils 1 zeigen, deuten die gestrichelten Linien 6c, 6d ferner an, dass die Leitungsbandabschnitte 6a, 6b in Fig. 1 bis 5 unterhalb der Anschlussenden 4a, 4b liegen.

Die beiden Anschlussenden 4a, 4b und infolgedessen auch die mit ihnen verbundenen Leitungsbandabschnitte 6a, 6b sind quer zur Längsachse 3 um ein Maß a (Fig. 1) beabstandet, das im fertigen Zustand der Wicklung dem Abstand der beiden Scheiben entspricht. Durch die Ausbildung des Verbindungsteils 1 wird daher der Abstand der Scheiben eindeutig festgelegt.

In Richtung der Längsachse 3 weist der Mittelabschnitt 2 eine zwischen den beiden Endkanten 2a, 2b gemessene Länge 1 (Fig. 1) auf, die vorzugsweise genauso groß ist, wie dem Umfang des zu bewickelnden Kerns nach Auflage der diesen umgebenden Isolationsschicht entspricht.

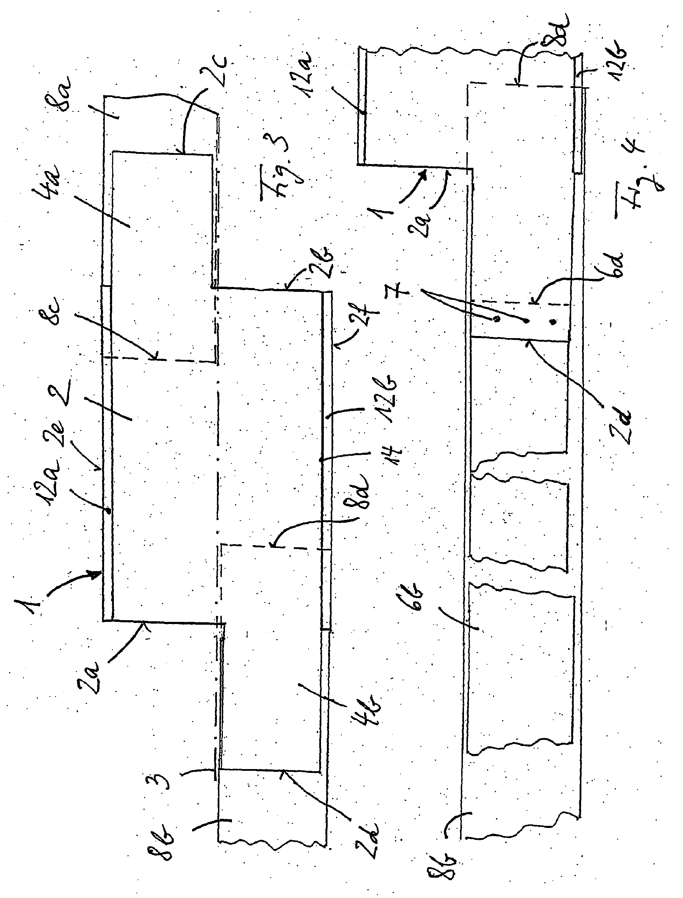

Fig. 3 und 4 zeigen, dass unterhalb der Leitungsbandabschnitte 6a, 6b und der zugehörigen Anschlussenden 4a, 4b noch jeweils eine streifenförmige Isolierfolie 8a und 8b zu liegen kommt. Insbesondere sind in Fig. 3 nur die jeweiligen Anschlussenden 4a und 4b und die Isolierfolien 8a und 8b gezeigt, die auf der Seite des Mittelabschnittes 2 an gestrichelt dargestellten Endkanten 8c, 8d enden. Dagegen zeigt Fig. 4 zusätzlich zu der linken Isolierfolie 8b auch noch den analog zu Fig. 2 mit dem Anschlussende 4b verbundenen Leitungsbandabschnitt 6b. Die Isolierfolien 8a und 8b dienen einerseits zur gegenseitigen Isolierung der mit den Leitungsbandabschnitten 6a, 6b herzustellenden Lagen der Wicklung, andererseits zur Isolierung von deren Endabschnitten gegen das Verbindungsteil 1. Aus diesem Grund liegen die Endkanten 8c, 8d der Isolierfolien 8a, 8b im Vergleich zu den Endkanten 6c, 6d der Leitungsbandabschnitte 6a, 6b weiter innen im Mittelabschnitt 2.

Fig. 5 zeigt schematisch das Umwickeln eines Kerns 10 mit der Wicklung nach Fig. 1 bis 4. Zu diesem Zweck wird zunächst der Mittelabschnitt 2 auf den Kern 10 aufgelegt und einmal um diesen herum gewickelt. Im Bereich einer Stoßstelle 11 bzw. eines schmalen, in Fig. 5 übertrieben groß dargestellten Spalts zwischen den beiden Endkanten 2a, 2b des Mittelabschnitts 2 beginnen die Anschlussenden 4a, 4b und etwas weiter außerhalb die mit diesen verbundenen Leitungsbandabschnitte 6a und 6b, während die eingelegten Isolierfolien 8a, 8b näher am Spalt 11 enden und den Spaltbereich überlappen. Aus Fig. 5 ist klar ersichtlich, dass das Verbindungsteil 1 aufgrund der beschriebenen Ausbildung auch festlegt, dass der Leitungsbandabschnitt 6a entgegen dem Uhrzeigersinn und der Leitungsbandabschnitt 6b im Uhrzeigersinn um den Kern 10 zu wickeln ist, d. h. das Verbindungsteil 1 legt nicht nur den Abstand a (Fig. 1), sondern auch den Wicklungssinn der beiden Leitungsbandabschnitte 6a, 6b fest.

Magnetpole dieser Art sind z. B. aus DE 10 2004 011 940 A1 und DE 10 2004 011 942 A1 bekannt. Zur Vermeidung von Wiederholungen weiterer Einzelheiten wird daher auf diese Druckschriften verwiesen, weshalb diese hiermit mit Referenz auf sie zum Gegenstand der vorliegenden Offenbarung gemacht werden. Nachfolgend werden nur für die Erfindung wesentliche Merkmale solcher Magnetpole näher erläutert.

Erfindungsgemäß weist der Mittelabschnitt 2 des Verbindungsteils 1 zwei seitliche, parallel zur Längsachse 3 erstreckte Längskanten 2e und 2f auf, die unter Bildung bogenförmiger Ausläufe 12a, 12b nach außen umgebogen sind. Die Ausläufe 12a, 12b sind in Fig. 1 bis 4 durch parallel zur Längsachse 3 verlaufende Linien 14 begrenzt und vor allem in Fig. 5 durch gestrichelt dargestellte Bereiche angedeutet. Die Ausläufe 12a, 12b erstrecken sich wie der Mittelabschnitt 2 über eine Länge, die im wesentlichen dem Umfang des Kerns 10 entspricht. Die Ausläufe 12a, 12b enden daher, wie im unteren Teil von Fig. 5 gezeigt ist, ebenfalls am Spalt 11.

Wie Fig. 1 bis 4 weiter zeigen, endet das Verbindungsteil 2 jeweils an den senkrecht zur Längsachse 3 verlaufenden Endkanten 2a und 2b. Da außerdem zwischen den Anschlussenden 4a, 4b der Abstand a besteht, entsteht nach dem Bewickeln des Kerns 10 im Bereich der Stoßstelle 11 ein offener Schlitz 15, der weder von den Anschlussenden 4a und 4b, noch von den Leitungsbandabschnitten 6a und 6b und den Isolierfolien 8a, 8b bedeckt ist. Dieser Schlitz 15 ist allerdings notwendig, um gegenseitige Berührungen der beiden Anschlussenden 4a, 4b und damit elektrische Kurzschlüsse zu vermeiden. Um in diesem Bereich dennoch unerwünschte Potentialerhöhungen zu vermeiden, wird der Schlitz 15 zweckmäßig mit einer auf der Isolationsschicht des Kerns 10 liegenden, teilleitfähigen Folie 16 abgedeckt, die in Fig. 5 schematisch nur durch einen gestrichelt dargestellten Kreis angedeutet ist. Die teilleitfähige Folie 16 besteht z. B. aus einem mit Ruß versetzten, organischen Isolierstoff und ist dazu geeignet, kapazitive Ströme abzuleiten, Betriebsströme aber nicht durchzulassen. Die Gefahr von Spitzenentladungen in diesem Bereich wird dadurch weiter reduziert.

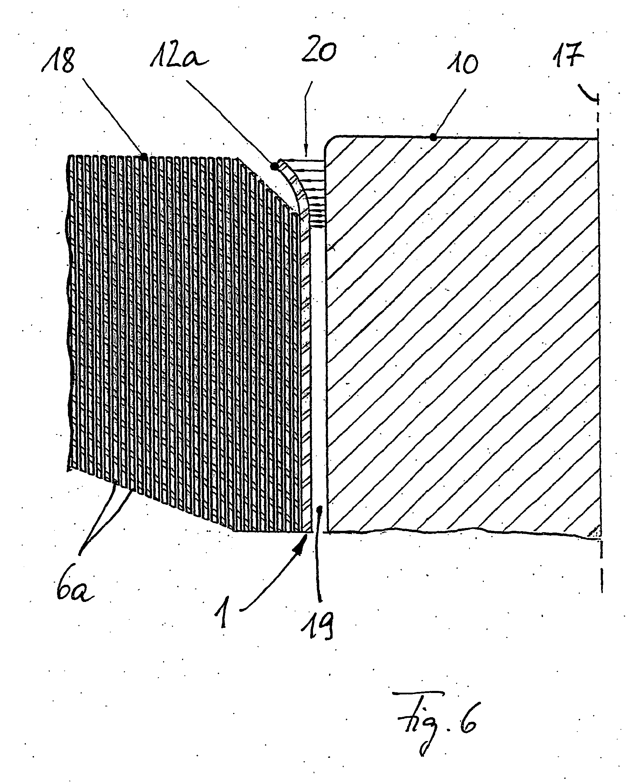

Fig. 6 zeigt einen teilweisen Querschnitt durch einen Magnetpol, der den Kern nach Fig. 5, eine Mittelachse 17 und eine nur teilweise dargestellte Scheibe 18 einer Wicklung aufweist. Der Kern 10 ist zunächst von einer Isolationsschicht 19 umgeben, auf die das Verbindungsteil 1 entsprechend Fig. 1 bis 5 gewickelt ist. Deutlich sichtbar ist hier der obere, bogenförmig verlaufende Auslauf 12a, der etwa in Höhe der oberen Längskante des die Scheibe 18 bildenden Leitungsbandabschnitts 6a oder auch etwas oberhalb davon endet. Pfeile 20 in Fig. 6 deuten an, dass der Kern 10 und das Verbindungsteil 1 die beiden Elektroden eines Plattenkondensators bilden, der in einem zwischen den Ausläufen 12a, 12b (Fig. 5) liegenden Bereich einen im wesentlichen konstanten Plattenabstand hat, so dass beim Betrieb des Magnetpols dort ein homogenes elektrisches Feld entsteht. An dem oberen bzw. unteren Rand dieses Plattenkondensators sorgen erfindungsgemäß die beiden Ausläufe 12a und 12b dafür, dass das elektrische Feld dort nicht durch Kanteneffekte erhöht, sondern vielmehr kontinuierlich abgebaut wird. Dadurch ergibt sich der eingangs beschriebene Vorteil, dass die Isolationsschicht 19 an den Seitenkanten keinen höheren Belastungen als im inneren, homogenen Teil ausgesetzt ist.

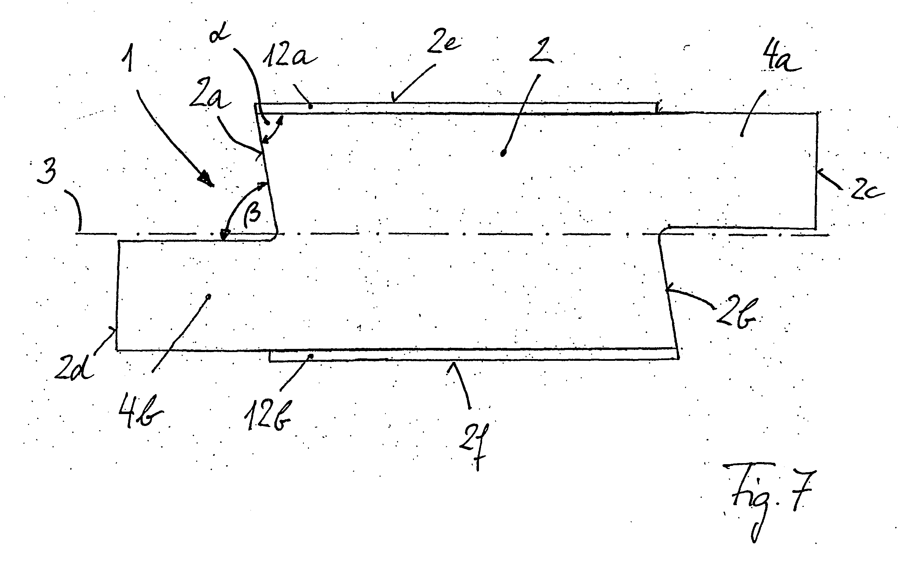

Eine weitere Reduzierung der Belastung der Isolationsschicht 19 beim Betrieb wird erfindungsgemäß durch einen schrägen Zuschnitt der Endkanten 2a und 2b erhalten, wie in Fig. 7 anhand eines derzeit für am besten gehaltenen Ausführungsbeispiels des erfindungsgemäßen Verbindungsteils 1 dargestellt ist. Die Endkanten 2a, 2b werden insbesondere, von den Längskanten 2e und 2f ausgehend, zum Zentrum des Mittelabschnitts 2 hin abgeschrägt, so dass sie mit den Endkanten 2e, 2f jeweils spitze Winkel α bilden und unter Bildung von entsprechend spitzen Winkeln β an den zugehörigen Anschlussenden 4a, 4b enden. Insbesondere wird die Anordnung so gewählt, dass die Ausläufe 12a, 12b nach dem Umwickeln des Kerns 10 im Sinne der Fig. 5 einander enger gegenüber stehen, als dem in Fig. 5 gezeigten Spalt 11 entspricht. Außerdem verlaufen die beiden Endkanten 2a und 2b hier, ausgehend von einem kleinstmöglichen Schlitz 15, schräg und nicht senkrecht zur Längsachse 3 nach außen. Aufgrund dieser Ausbildung der Endkanten 2a, 2b ist es sogar möglich, die beiden Ausläufe 12a, 12b im Bereich des Spalts 11 mit einer vorgewählten, in Fig. 5 für den Auslauf 12a schematisch angedeuteten Überlappung 21 zu verlegen, wobei eine gepunktete Linie 22 die hier schräg verlaufende Endkante 2a andeuten soll. Gleichzeitig können in diesem Fall die Isolierfolien 8a und 8b dazu verwendet werden, die beiden überlappten Teile elektrisch gegeneinander zu isolieren, um Kurzschlüsse in diesem Bereich zu vermeiden. Insgesamt wird durch die anhand der Fig. 7 beschriebenen, vorzugsweise zusätzlich zur teilleitfähigen Folie 16 vorhandenen Maßnahmen erreicht, dass die Isolationsschicht 19 (Fig. 6) durch im Bereich des Spalts 11 und des Schlitzes 15 unvermeidbare Potentialerhöhungen nicht übermäßig belastet wird.

Die Erfindung ist nicht auf die beschriebenen Ausführungsbeispiele beschränkt, die auf vielfache Weise abgewandelt werden können. Dies gilt insbesondere für die im Einzelfall gewählte Form des Verbindungsteils 1, das z. B. aus einem durch Stanzen hergestellten Formteil bestehen kann. Auch die Herstellung der Ausläufe 12a, 12b kann im Prinzip beliebig vorgenommen werden. Für die Zwecke der Erfindung ist es vorteilhaft, die Umbiegungen durch kalte Umformung der Randbereiche des Verbindungsteils 1 in einem Presswerkzeug od. dgl. herzustellen. Die Krümmungsradien im Bereich der Umbiegungen sind dabei anhand des jeweiligen Einzelfalls zu wählen. Weiter können Potentialerhöhungen in einem dem Kern 10 nahen Bereich dadurch reduziert werden, dass die Leitungsbandabschnitte 6a und 6b, ausgehend von den Anschlussenden 4a und 4b, eine allmählich zunehmende Breite erhalten, wie in Fig. 2 und 4 am jeweils linken Ende des Leitungsbandabschnitts 6b angedeutet ist. Dadurch werden die Kanten der ganz innen liegenden Lagen im Bereich der Ausläufe 12a, 12b der fertigen Wicklung jeweils durch weiter außen liegende Lagen flächig abgedeckt (vgl. Fig. 6), wie im Prinzip bereits z. B. in DE 10 2004 011 941 A1 und DE 10 2004 011 942 A1 beschrieben ist. Weiter ist es möglich, den Magnetpol bei analoger Ausbildung aus mehr als zwei in Richtung der Achse des Kerns 10 übereinander liegenden Scheiben auszubilden. Schließlich versteht sich, dass die verschiedenen Merkmale auch in anderen als den beschriebenen und dargestellten Kombinationen angewendet werden können.

## Patentansprüche

1. Magnetpol für Magnetschwebefahrzeuge mit einem Kern (10) und einer auf diesen aufgewickelten, zwei übereinander liegende Scheiben (18) aufweisenden Wicklung, wobei die beiden Scheiben (18) zwei mit entgegengesetztem Wicklungssinn und in mehreren Lagen um den Kern (10) gewickelte Leitungsbandabschnitte (6a, 6b) enthalten, die an dem Kern (10) nahen Enden durch ein mittleres, eine erste Lage auf dem Kern (10) bildendes Verbindungsteil (1) elektrisch leitend miteinander verbunden sind, **dadurch gekennzeichnet, dass** das Verbindungsteil (1) an zueinander parallelen, seitlichen Längskanten (2c, 2d) unter Bildung je eines bogenförmigen Auslaufs (12a, 12b) nach außen umgebogen ist.

2. Magnetpol nach Anspruch 1, **dadurch gekennzeichnet, dass** das Verbindungsteil (1) zwei, den Abstand (a) der beiden Scheiben (18) festlegende, mit je einem der Leitungsbandabschnitte (6a, 6b) verbundene Anschlussenden (4a, 4b) aufweist.

3. Magnetpol nach Anspruch 1 oder 2, **dadurch gekennzeichnet, dass** die bogenförmigen Ausläufe (12a, 12b) in Umfangsrichtung des Kerns (10) eine etwas größere Länge aufweisen, als dem Umfang des Kerns (10) entspricht, und an einander zugewandten Enden mit einer Überlappung (21) verlegt sind.

4. Magnetpol nach einem der Ansprüche 1 bis 3, **dadurch gekennzeichnet, dass** das Verbindungsteil (1) ein im wesentlichen rechteckiges, flächiges Formteil ist, das an gegenüber liegenden Enden je eines der Anschlussenden (4a, 4b) aufweist.

5. Magnetpol nach Anspruch 4, **dadurch gekennzeichnet, dass** die Überlappung (21) der bogenförmigen Ausläufe (12a, 12b) durch einen schrägen Zuschnitt (22) von an die Endabschnitte (4a, 4b) grenzenden Endkanten (2a, 2b) des Verbindungsteils (1) erhalten ist.

## Claims

1. A magnetic pole for maglev vehicles, with a core (10) and a coil wound onto the same and having two discs (18) lying one above the other, wherein the two discs (18) contain two conduction band sections (6a, 6b) wound around the core (10) in the opposite winding direction and in a plurality of layers, which conduction band sections are electrically conductively connected to one another at the ends close to the core (10) by means of a central connecting part (1) forming a first layer on the core (10), **characterised in that** the connecting part (1) is bent outwards at mutually parallel lateral longitudinal edges (2c, 2d) forming a curved ramp (12a, 12b) in each case.

2. The magnetic pole according to Claim 1, **characterised in that** the connecting part (1) has two connection ends (4a, 4b), which determine the spacing (a) of the two discs (18) and are each connected to one of the conduction band sections (6a, 6b).

3. The magnetic pole according to Claim 1 or 2, **characterised in that** the curved ramps (12a, 12b) have a somewhat longer length than corresponds to the circumference of the core (10) in the circumferential direction of the core (10) and are laid with an overlap (21) at mutually facing ends.

4. The magnetic pole according to one of Claims 1 to 3, **characterised in that** the connecting part (1) is an essentially rectangular flat shaped part which has each of the connection ends (4a, 4b) at opposite ends.

5. The magnetic pole according to Claim 4, **characterised in that** the overlapping (21) of the curved ramps (12a, 12b) is achieved by means of an oblique cutting (22) of the end edges (2a, 2b) of the connecting part (1) adjoining the end sections (4a, 4b).

## Revendications

1. Pôle magnétique pour véhicules à sustentation magnétique avec un noyau (10) et un enroulement enroulé sur celui-ci présentant deux disques (18) superposés, les deux disques (18) comprenant deux sections de conductance (6a, 6b) avec un sens d'enroulement inverse et enroulées en plusieurs couches autour du noyau (10), lesquelles sections sont interconnectées de manière électroconductrice aux extrémités proches du noyau (10) grâce à un élément de connexion (1) intermédiaire formant une première couche sur le noyau (10), **caractérisé en ce que** l'élément de connexion (1) est replié vers l'extérieur au niveau d'arêtes longitudinales (2c, 2d) latérales parallèles, de manière à former respectivement une évacuation cintrée (12a, 12b).

2. Pôle magnétique selon la revendication 1, **caractérisé en ce que** l'élément de connexion (1) présente deux extrémités de connexion (4a, 4b) déterminant l'écartement (a) entre les deux disques (18) et respectivement connectées à l'une des sections de conductance (6a, 6b).

3. Pôle magnétique selon la revendication 1 ou 2, **caractérisé en ce que** les évacuations cintrées (12a, 12b) présentent en direction périphérique du noyau (10) une longueur un peu plus importante que ce qui correspond à la périphérie du noyau (10), et **en ce qu'**elles sont posées avec une superposition (21) au niveau d'extrémités se faisant face.

4. Pôle magnétique selon l'une des revendications 1 à 3, **caractérisé en ce que** l'élément de connexion (1) est une pièce moulée plane essentiellement rectangulaire, laquelle présente à des extrémités situées en vis-à-vis respectivement l'une des extrémités de connexion (4a, 4b).

5. Pôle magnétique selon la revendication 4, **caractérisé en ce que** la superposition (21) des évacuations cintrées (12a, 12b) est obtenue par une découpe (22) en biais d'arêtes d'extrémité (2a, 2b) de l'élément de connexion (1) jouxtant les sections d'extrémité (4a, 4b).
